# EUROPEAN PATENT SPECIFICATION

(11) **EP 3 261 393 B1**
(45) Date of publication and mention of the grant of the patent: **07.08.2024**
(21) Application number: 15896783.6
(22) Date of filing: 30.06.2015
(51) Int. Cl.: H04W 72/20, H04W 24/10, H04W 16/14

(54) **METHOD AND DEVICE FOR TRANSMITTING CHANNEL STATE INFORMATION**
VERFAHREN UND VORRICHTUNG ZUR ÜBERTRAGUNG VON KANALSTATUSINFORMATIONEN
PROCÉDÉ ET DISPOSITIF POUR TRANSMETTRE DES INFORMATIONS D'ÉTAT DE CANAL

(43) Date of publication of application: 27.12.2017
(73) Proprietor: Huawei Technologies Co., Ltd., Longgang District Shenzhen, Guangdong 518129 (CN)
(72) Inventor: LI, Xiaocui, Shenzhen Guangdong 518129 (CN); XU, Kai, Shenzhen Guangdong 518129 (CN)
(74) Representative: Isarpatent
(86) International application number: PCT/CN2015/082895
(87) International publication number: WO 2017/000252

(56) References cited:
- CN-A- 102 450 073
- CN-A- 102 835 042
- CN-A- 104 579 518
- US-A1- 2014 036 881
- US-A1- 2014 341 018
- US-A1- 2015 023 302
- US-A1- 2015 126 207
- LG ELECTRONICS: "CSI support in LAA", vol. RAN WG1, no. Belgrade, Serbia; 20150420 - 20150424, 19 April 2015 (2015-04-19), XP050934391, Retrieved from the Internet <URL:http://www.3gpp.org/ftp/Meetings_3GPP_SYNC/RAN1/Docs/> [retrieved on 20150419]
- CATR: "Considerations on CSI feedback for LAA", vol. RAN WG1, no. Fukuoka, Japan; 20150525 - 20150529, 24 May 2015 (2015-05-24), XP050971036, Retrieved from the Internet <URL:http://www.3gpp.org/ftp/Meetings_3GPP_SYNC/RAN1/Docs/> [retrieved on 20150524]

## Description

### TECHNICAL FIELD

The present invention relates to the communications field, and more specifically, to a method for transmitting channel state information and a transmission device.

### BACKGROUND

In a licensed-assisted access using Long Term Evolution (long term evolution unlicensed spectrum, LAA-LTE) system, a node uses a channel resource by using a listen before talk (Listen Before Talk, LBT) principle. LBT is a carrier sense multiple access (Carrier Sense Multiple Access, CSMA) technology.

One main feature of a Long Term Evolution (Long Term Evolution, LTE) system is that downlink transmission configuration and selection of a related parameter depend on an instantaneous channel condition of a downlink. Channel state information provided by a terminal for a network is an important factor for supporting related scheduling of a downlink channel, and the network needs to make a scheduling decision based on the channel state information.

There are two types of LTE channel state information, that is, periodic channel state information and aperiodic channel state information. A difference between the two types lies in how a report is triggered.

An aperiodic report is sent when the network performs a direct request by using a "channel state request" identifier included in an uplink scheduling grant. Aperiodic channel state information is always sent on a physical uplink shared channel (Physical Uplink Shared Channel, PUSCH), that is, a resource that is dynamically allocated.

Periodic channel state information configured by the network is sent in a specific period, and is usually sent on a physical uplink control channel (Physical Uplink Control Channel, PUCCH) resource.

In the LAA-LTE system, user equipment (UE, User Equipment) cannot always occupy a channel resource, and therefore, it is possible that the UE cannot report channel state information to a base station in time. Consequently, the base station cannot make a corresponding scheduling decision according to the channel state information.

US 2014 / 036881 A1 discloses a method for transmitting control information by a base station in a wireless communication system, wherein the method comprises a step of transmitting a physical downlink control channel (PDCCH). The downlink control information of PDCCH may include an indicator indicating whether or not a reference signal is transmitted in a time domain corresponding to the subframe in which the PDCCH is transmitted. PDCCH transmits downlink control information DCI with a format of 0 and 4 used for uplink scheduling grant. The DCI formats 0 to 4 may include specific information indicating whether the reference signal is transmitted in the unlicensed band. An unlicensed band reference indicator UBRI may be contained in DCI including an uplink grant. The UBRI may be contained in CSI request information contained in DCI. The DCI format 0 to 4 may include other information indicating the presence or absence of a CSI request in the unlicensed band and may include other information indicating the presence or absence of a CSI request in the unlicensed band.

LG ELECTRONICS: "CSI support in LAA", 3GPP DRAFT; R1-151519 CSI_FINAL, 3RD GENERSTION PARTNERSHIP PROJECT (3GPP), MOBILE COMPETENCE CENTRE; 650, ROUTE DES LUCIOLES, F-06921 SOPHIA-ANTIPOLIS CEDEC; FRANCE, VOL. RAN WG1, no. Belgrade, Serbia; 20150420 - 20150424 19 April 2015, Retrieved from the internet: URL:https//www.3gpp.org/ftp/Meetings_3GPP_SYNC/RAN1/Docs/ discloses CSI support unlicensed carrier. It is disclosed that a user equipment can feedback CSI on a licensed carrier regardless whether the user equipment acquires channel access on unlicensed carrier or not. Valid CSI resources for aperiodic and periodic CSI feedback are discussed. Valid resources can be indicated by the CSI triggering DCI itself or linked to the timing of DCI transmission.

### SUMMARY

Therefore, an object of the present invention is to provide a transmission device and a method for transmitting channel state information. This object is solved by methods and transmission devices with the features of the independent claims.

According to the method for transmitting channel state information and the device in the embodiments of the present invention, the first device indicates, to the second device, the carrier resource used for transmitting the channel state information, so that the second device can send the channel state information of the unlicensed carrier to the first device in time, and the first device can make a corresponding scheduling decision in time according to the channel state information of the unlicensed carrier.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for transmitting channel state information according to an embodiment of the present invention;
FIG. 2 is a flowchart of interaction of transmitting channel state information according to an embodiment of the present invention;
FIG. 3 is a flowchart of another method for transmitting channel state information according to an embodiment of the present invention;
FIG. 4 is a flowchart of still another method for transmitting channel state information according to an unclaimed embodiment;
FIG. 5 is a flowchart of still another method for transmitting channel state information according to an unclaimed embodiment;
FIG. 6 is a schematic structural diagram of a transmission device according to an embodiment of the present invention;
FIG. 7 is a schematic structural diagram of another transmission device according to an embodiment of the present invention;
FIG. 8 is a schematic structural diagram of still another transmission device according to an unclaimed embodiment;
FIG. 9 is a schematic structural diagram of still another transmission device according to an unclaimed embodiment;
FIG. 10 is a schematic structural diagram of still another transmission device according to an embodiment of the present invention;
FIG. 11 is a schematic structural diagram of still another transmission device according to an embodiment of the present invention;
FIG. 12 is a schematic structural diagram of still another transmission device according to an unclaimed embodiment; and
FIG. 13 is a schematic structural diagram of still another transmission device according to an unclaimed embodiment.

### DESCRIPTION OF EMBODIMENTS

The following clearly and completely describes the technical solutions in the embodiments of the present invention with reference to the accompanying drawings in the embodiments of the present invention.

The technical solutions of the present invention may be applied to various communications systems, such as: a Global System for Mobile Communications (GSM, Global System for Mobile Communications), a Code Division Multiple Access (CDMA, Code Division Multiple Access) system, a Wideband Code Division Multiple Access (WCDMA, Wideband Code Division Multiple Access) system, a general packet radio service (GPRS, General Packet Radio Service) system, and a Long Term Evolution (LTE, Long Term Evolution) system.

User equipment (UE, User Equipment), also referred to as a mobile terminal (Mobile Terminal), mobile user equipment, and the like, may communicate with one or more core networks over a radio access network (for example, RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges voice and/or data with the radio access network.

A base station may be a base transceiver station (BTS, Base Transceiver Station) in GSM or CDMA, or may be a NodeB (NodeB) in WCDMA, or may be an evolved NodeB (eNB or e-NodeB, evolvedNode B) in LTE, and this is not limited in the present invention. However, for ease of description, the following embodiments are described by using an eNB as an example.

Spectrums used in a wireless communications system include a licensed spectrum (Licensed Spectrum) and an unlicensed spectrum (Unlicensed Spectrum). The licensed spectrum can be used only after a grant is obtained, and the unlicensed spectrum can be legally used by anyone without needing a grant. A carrier on the licensed spectrum is referred to as a licensed carrier (Licensed Carrier), and a carrier on the unlicensed spectrum is referred to as an unlicensed carrier (Unlicensed Carrier). A wireless communications system in which communication is performed by using both a licensed spectrum and an unlicensed spectrum and that includes but is not limited to an LAA-LTE system is applicable to an application scenario of a method and a device in the embodiments of the present invention.

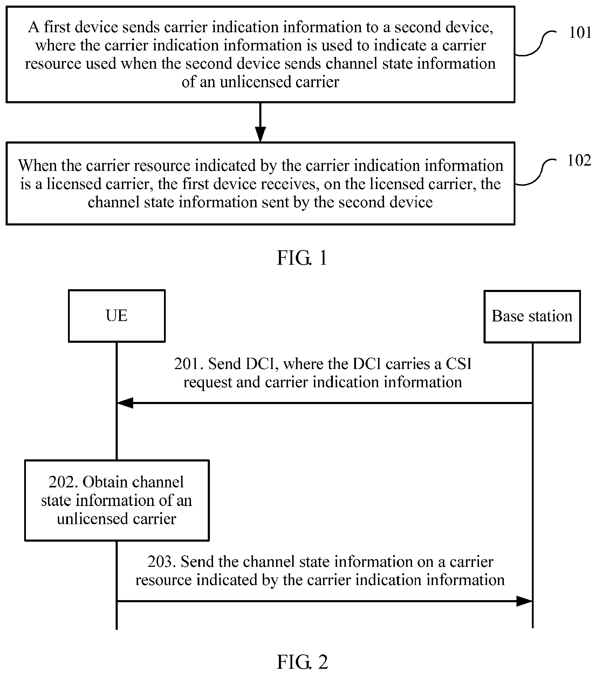

FIG. 1 is a flowchart of a method for transmitting channel state information according to an embodiment of the present invention. The method includes the following steps.

101. A first device sends carrier indication information to a second device.

The carrier indication information is used to indicate a carrier resource used when the second device sends channel state information of an unlicensed carrier.

It should be noted that the first device and the second device can perform communication by using a licensed carrier and an unlicensed carrier. For example, in an LAA system, when there is an unlicensed carrier resource, a base station and UE perform communication by using the unlicensed carrier; and when there is no unlicensed carrier resource, the base station and the UE perform communication by using a licensed carrier.

102. When a carrier resource indicated by the carrier indication information is a licensed carrier, the first device receives, on the licensed carrier, channel state information sent by the second device.

In this embodiment of the present invention, the first device indicates, to the second device, the carrier resource used for transmitting the channel state information, so that the second device can send the channel state information of the unlicensed carrier to the first device in time, and the first device can make a corresponding scheduling decision in time according to the channel state information of the unlicensed carrier.

The carrier indication information is represented by an information bit; in the unclaimed embodiment, the carrier indication information is represented by a scrambling manner used for transmitting designated signaling; or the carrier indication information is represented by a sequence number of a subcarrier used for transmitting designated signaling.

In the claimed embodiment, the implementation of step 101 is: The first device sends the carrier indication information to the second device by using downlink control information DCI. The DCI carries a channel state information CSI request and the carrier indication information, the CSI request is used to request the second device to send the channel state information of the unlicensed carrier, the first device is a base station, and the second device is user equipment.

In the claimed embodiment, the carrier indication information is represented by a newly-added bit indicator in the DCI. Alternatively, in the claimed embodiment, the carrier indication information is represented by an unused bit indicator in the DCI. Alternatively, in the claimed embodiment, the carrier indication information is represented by bit information that does not have an indication meaning in the DCI.

FIG. 2 is a flowchart of interaction of transmitting channel state information in an LAA system according to an embodiment of the present invention. In FIG. 2, a first device is a base station, and a second device is UE. The UE sends channel state information of an unlicensed carrier to the base station in an aperiodic manner. It should be understood that the first device mentioned in any part of the present invention is a device receiving channel state information of an unlicensed carrier; and the second device mentioned in any part of the present invention is a device sending channel state information of an unlicensed carrier.

201. The base station sends DCI to the UE, where the DCI carries a CSI request and carrier indication information.

For an aperiodic report, the DCI includes a 2-bit CSI request. Therefore, when there is the CSI request, whether the UE transmits aperiodic channel state information on an unlicensed carrier or a licensed carrier may be centrally configured by a base station side. Generally, the channel state information may be represented by a channel state information report (CSI Report).

**Table 1**

| **Value of a CSI request field** | **Description** |
|---|---|
| 00 | No aperiodic CSI report is triggered (No aperiodic CSI report is triggered) |
| 01 | An aperiodic CSI report is triggered for serving cell C (An aperiodic CSI report is triggered for a serving cell C) |
| 10 | An aperiodic CSI report is triggered for a first set of serving cells configured by a higher layers (An aperiodic CSI report is triggered for a first set of serving cells configured by a higher layer) |
| 11 | An aperiodic CSI report is triggered for a second set of serving cells configured by a higher layers (An aperiodic CSI report is triggered for a second set of serving cells configured by a higher layer) |

Table 1 lists a value of the CSI request field. As shown in Table 1, when a Value of CSI request field (a value of the CSI request field) is "01", "10", or "11", there is an aperiodic channel state information request.

When the channel state information is reported in the aperiodic manner, the base station needs to send the CSI request to the UE. The CSI request is used to request the UE to report the channel state information of the unlicensed carrier.

In the claimed embodiment, the base station sends the DCI to the UE, and adds the CSI request to the DCI. In the claimed embodiment, the base station sends the carrier indication information to the UE, so as to indicate a carrier resource used when the UE sends the channel state information of the unlicensed carrier.

There are two main manners for LAA uplink transmission. One is (in the claimed embodiment) that the base station preempts a channel resource (an unlicensed carrier resource) in an LBT manner, that is, the eNB performs LBT before UL transmission, and if the base station obtains the channel resource by means of preemption, the base station sends a UL grant to the UE, and occupies the channel until the UE completes UL transmission. The other is that the UE preempts a carrier resource in the LBT manner, that is, the UE performs LBT before UL transmission; after receiving a UL grant, the UE preempts a channel in the LBT manner, and if the channel is idle, the UE obtains the channel by means of preemption, and the UE sends data according to scheduling by the eNB. In either manner, the base station may know whether the channel resource is obtained by means of preemption.

In the claimed embodiment, when the channel resource is obtained by means of preemption (regardless of whether the channel resource is obtained by the base station or the UE by means of preemption), the base station may instruct, by using the carrier indication information, the UE to send the channel state information by using the unlicensed carrier; and, in the claimed embodiment, when the channel resource is not obtained by means of preemption, the base station may instruct, by using the carrier indication information, the UE to send the channel state information by using a licensed carrier.

The base station sends explicitly the carrier indication information in the claimed embodiment. In this case, the carrier indication information is represented by an information bit. In the claimed embodiment, the base station uses a newly-added bit indicator in the DCI to represent the carrier indication information. For example, the carrier indication information may be represented by a newly-added carrier bit indicator in a format 0 or a format 4 in the DCI. The base station may add a bit to the format 0 or the format 4 in the DCI, and may use the bit as a carrier bit indicator. For example, 0 is used to indicate that the CSI report is transmitted on the unlicensed carrier, and 1 is used to indicate that the CSI report is transmitted on a licensed carrier.

Alternatively, in the claimed embodiment, the base station uses an unused bit indicator in the DCI to represent the carrier indication information. For example, the carrier indication information is represented by an unused bit in a format 0 or a format 4 in the DCI. The base station may find an unused bit from the format 0 or the format 4 in the DCI, and may use the bit as a carrier bit indicator.

Alternatively, in the claimed embodiment, the base station uses bit information that does not have a specific meaning in the DCI to represent the carrier indication information. For example, the carrier indication information is represented by two types of bit information that does not have an indication meaning in a format 0 or a format 4 in the DCI. The base station may find, from the format 0 or the format 4 in the DCI, two types of bit information that does not have an indication meaning, so as to indicate whether the channel state information is transmitted on the unlicensed carrier or the channel state information is transmitted on a licensed carrier. For example, a carrier indicator field (Carrier Indicator Field CIF) in the format 0 or the format 4 in the DCI includes 3 bits, and the carrier indicator field may indicate 8 numerical values: 0, 1, 2, 3, 4, 5, 6, and 7. However, when supporting multiple carriers, an existing system supports a maximum of five carriers. In this case, it means that 0, 1, 2, 3, and 4 are used, and the three values: 5, 6, and 7 do not have any specific meaning. In this case, 5 (101 in a binary system) may be used to indicate that the CSI report is transmitted on the unlicensed carrier, 6 (110 in the binary system) may be used to indicate that the CSI report is transmitted on a licensed carrier, and the like.

In the unclaimed embodiment, the base station may implicitly send the carrier indication information to the UE. In the unclaimed embodiment, the carrier indication information is represented by a scrambling manner used for transmitting designated signaling. For example, the base station and the UE may pre-agree on representing the carrier indication information by a scrambling manner used for transmitting the DCI. Specifically, a scrambling manner 1 indicates that the channel state information is transmitted by using a licensed carrier, a scrambling manner 2 indicates that the channel state information is transmitted by using the unlicensed carrier, and the like. Certainly, the carrier indication information may also be represented by a scrambling manner specified by a protocol. In the unclaimed embodiment, the carrier indication information is represented by a sequence number of a subcarrier used for transmitting designated signaling. For example, when the base station sends the DCI on the 0^{th} to (N-1)^{th} subcarrier, it indicates that the channel state information is transmitted by using the unlicensed carrier; and when the base station sends the DCI on the N^{th} to (2N-1)^{th} subcarrier, it indicates that the channel state information is transmitted by using a licensed carrier. N is a positive integer.

202. The UE obtains channel state information of an unlicensed carrier.

The UE obtains the channel state information of the unlicensed carrier according to the CSI request carried in the DCI. For a specific implementation, refer to the prior art. Details are not described herein again in this embodiment of the present invention.

203. Send the channel state information on a carrier resource indicated by the carrier indication information.

When the carrier resource indicated by the carrier indication information is a licensed carrier, the UE sends the channel state information of the unlicensed carrier on the licensed carrier. In this case, the channel state information sent by the UE is transmitted in a cross-carrier manner.

When the carrier resource indicated by the carrier indication information is an unlicensed carrier, the UE sends the channel state information on the unlicensed carrier. In this case, sending the channel state information of the unlicensed carrier on the unlicensed carrier by the UE is similar to that in the prior art.

In the claimed embodiment, the implementation of step 101 is: When the first device preempts a channel resource in an LBT manner, and the first device does not obtain the channel resource by means of preemption, the first device sends the carrier indication information to the second device. The carrier indication information is used to instruct the second device to transmit the channel state information of the unlicensed carrier on a licensed carrier, the first device is a base station, and the second device is user equipment.

In an LAA system, the UE reports channel state information of an unlicensed carrier to the base station in a periodic manner, and the base station preempts a channel resource in the LBT manner before uplink transmission. When the base station does not obtain the channel resource by means of preemption, the base station sends implicitly the carrier indication information, so as to instruct the UE to report the channel state information of the unlicensed carrier on a licensed carrier. For a specific implementation, refer to the embodiment shown in FIG. 2. Details are not described herein again in this embodiment of the present invention.

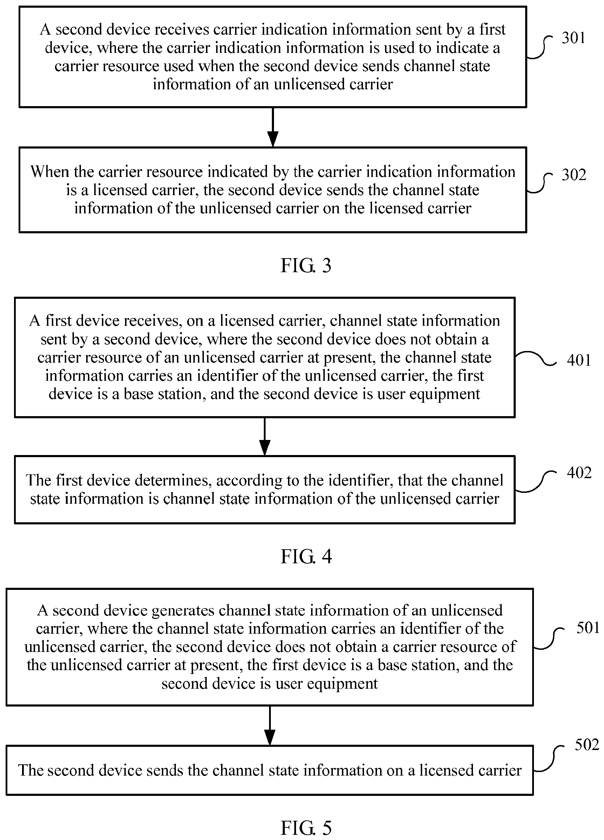

FIG. 3 is a flowchart of another method for transmitting channel state information according to an embodiment of the present invention. The method in FIG. 3 is executed by a second device, and the method includes the following steps.

301. The second device receives carrier indication information sent by a first device.

The carrier indication information is used to indicate a carrier resource used when the second device sends channel state information of an unlicensed carrier.

302. When a carrier resource indicated by the carrier indication information is a licensed carrier, the second device sends channel state information of an unlicensed carrier on the licensed carrier. In this embodiment of the present invention, the second device reports the channel state information of the unlicensed carrier to the first device in time according to the carrier resource that is used for transmitting the channel state information and that is indicated by the first device, so that the first device can make a corresponding scheduling decision in time according to the channel state information of the unlicensed carrier.

The carrier indication information is represented by an information bit; in the unclaimed embodiments, the carrier indication information is represented by a scrambling manner used for transmitting designated signaling; or the carrier indication information is represented by a sequence number of a subcarrier used for transmitting designated signaling.

In the claimed embodiment, the implementation of step 301 is: The second device receives downlink control information DCI to obtain the carrier indication information. The DCI carries a channel state information CSI request and the carrier indication information, the CSI request is used to request the second device to send the channel state information of the unlicensed carrier, the first device is a base station, and the second device is user equipment. A specific implementation of step 302 is: The second device sends the channel state information of the unlicensed carrier on the licensed carrier according to the CSI request.

In the claimed embodiment, the carrier indication information is represented by a newly-added bit indicator in the DCI; or the carrier indication information is represented by an unused bit indicator in the DCI; or the carrier indication information is represented by bit information that does not have an indication meaning in the DCI.

For a specific implementation of this embodiment, refer to the method implemented by UE in the embodiment shown in FIG. 2. Details are not described herein again in this embodiment of the present invention.

In the claimed embodiment, the implementation of step 302 is: The second device sends the channel state information of the unlicensed carrier on the licensed carrier in a first channel state information period after a moment at which the carrier indication information is received.

In an LAA system, the UE reports channel state information of an unlicensed carrier to the base station in a periodic manner, and the base station preempts a channel resource in an LBT manner before uplink transmission. When the base station does not obtain the channel resource by means of preemption, the base station sends implicitly the carrier indication information, so as to instruct the UE to report the channel state information of the unlicensed carrier on a licensed carrier. For a specific implementation, refer to the embodiment shown in FIG. 2. Details are not described herein again in this embodiment of the present invention. After receiving the instruction, the UE sends the channel state information of the unlicensed carrier on the licensed carrier in a first channel state information period after the carrier indication information is received.

FIG. 4 is a flowchart of still another method for transmitting channel state information according to an unclaimed embodiment. The method in FIG. 4 is executed by a first device, and the method includes the following steps.

401. The first device receives, on a licensed carrier, channel state information sent by a second device.

The second device cannot use a carrier resource of an unlicensed carrier at present, the channel state information carries an identifier of the unlicensed carrier, the first device is a base station, and the second device is user equipment.

402. The first device determines, according to the identifier, that the channel state information is channel state information of the unlicensed carrier.

In this example, the first device determines, by using the carrier identifier in the channel state information sent by the second device on the licensed carrier, the unlicensed carrier to which the channel state information belongs, so that the first device can make a corresponding scheduling decision in time according to the channel state information of the unlicensed carrier.

A manner of periodically reporting the channel state information of the unlicensed carrier, or a manner of aperiodically reporting the channel state information of the unlicensed carrier is applicable to the method in this example.

For example, in the embodiment shown in FIG. 2, when reporting the channel state information, alternatively, the UE may add the identifier of the unlicensed carrier to the channel state information of the unlicensed carrier, and when receiving the channel state information on the licensed carrier, the base station may determine, according to the identifier in the channel state information, that the channel state information belongs to the unlicensed carrier.

For another example, in an LAA system, the UE preempts a channel resource of an unlicensed carrier in an LBT manner before uplink transmission, that is, the UE performs LBT before UL transmission. A first device is a base station, and a second device is UE. After receiving a UL grant, the UE preempts a channel in the LBT manner. If the channel is idle, the UE obtains the channel by means of preemption, and the UE sends data according to scheduling by the eNB. If the UE does not obtain the channel by means of preemption, the UE transmits periodic channel state information of an unlicensed carrier in a cross-carrier manner on a licensed carrier, and adds a carrier number of this carrier (the unlicensed carrier) when reporting the periodic channel state information on the licensed carrier. After receiving, on the licensed carrier, the channel state information sent by the UE, the base station may identify, according to the carrier number, a carrier to which the channel state information belongs.

FIG. 5 is a flowchart of still another method for transmitting channel state information according to an unclaimed embodiment. The method in FIG. 5 is executed by a second device, and the method includes the following steps.

501. The second device generates channel state information of an unlicensed carrier.

The channel state information carries an identifier of the unlicensed carrier, the second device does not obtain a carrier resource of the unlicensed carrier at present, the first device is a base station, and the second device is user equipment.

502. The second device sends the channel state information on a licensed carrier.

In this example, the second device adds the identifier of the unlicensed carrier to the channel state information of the unlicensed carrier, and then sends the channel state information to the first device on the licensed carrier, so that the first device can determine, according to the identifier, the unlicensed carrier to which the channel state information belongs, and the first device can make a corresponding scheduling decision in time according to the channel state information of the unlicensed carrier.

A manner of periodically reporting the channel state information of the unlicensed carrier, or a manner of aperiodically reporting the channel state information of the unlicensed carrier is applicable to the method in this embodiment of the present invention.

For example, in the embodiment shown in FIG. 2, when reporting the channel state information, alternatively, the UE may add the identifier of the unlicensed carrier to the channel state information of the unlicensed carrier, and when receiving the channel state information on the licensed carrier, the base station may determine, according to the identifier in the channel state information, that the channel state information belongs to the unlicensed carrier.

For another example, in an LAA system, the UE preempts a channel resource of an unlicensed carrier in an LBT manner before uplink transmission, that is, the UE performs LBT before UL transmission. A first device is a base station, and a second device is UE. After receiving a UL grant, the UE preempts a channel in the LBT manner. If the channel is idle, the UE obtains the channel by means of preemption, and the UE sends data according to scheduling by the eNB. If the UE does not obtain the channel by means of preemption, the UE transmits periodic channel state information of an unlicensed carrier in a cross-carrier manner on a licensed carrier, and adds a carrier number of this carrier (the unlicensed carrier) when reporting the periodic channel state information on the licensed carrier. After receiving, on the licensed carrier, the channel state information sent by the UE, the base station may identify, according to the carrier number, a carrier to which the channel state information belongs.

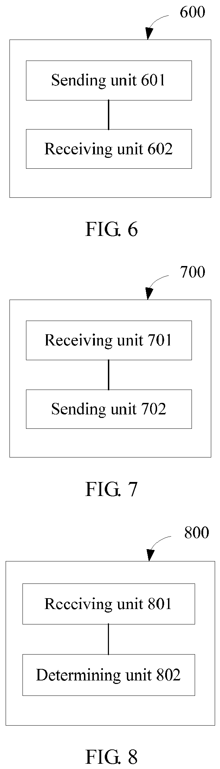

FIG. 6 is a schematic structural diagram of a transmission device 600 according to an embodiment of the present invention. The transmission device 600 includes a sending unit 601 and a receiving unit 602.

The sending unit 601 is configured to send carrier indication information to a second device.

The carrier indication information is used to indicate a carrier resource used when the second device sends channel state information of an unlicensed carrier.

The receiving unit 602 is configured to: when the carrier resource indicated by the carrier indication information is a licensed carrier, receive, on the licensed carrier, the channel state information sent by the second device.

In this embodiment of the present invention, the transmission device 600 indicates, to the second device, the carrier resource used for transmitting the channel state information, so that the second device can send the channel state information of the unlicensed carrier to the transmission device in time, and the transmission device 600 can make a corresponding scheduling decision in time according to the channel state information of the unlicensed carrier.

The carrier indication information is represented by an information bit; in the unclaimed embodiment, the carrier indication information is represented by a scrambling manner used for transmitting designated signaling; or the carrier indication information is represented by a sequence number of a subcarrier used for transmitting designated signaling.

In the claimed embodiment, the sending unit 601 is configured to send the carrier indication information to the second device by using DCI. The DCI carries a CSI request and the carrier indication information. The CSI request is used to request the second device to send the channel state information of the unlicensed carrier, the transmission device 600 is a base station, and the second device is user equipment.

In the claimed embodiment, the carrier indication information is represented by a newly-added bit indicator in the DCI; or the carrier indication information is represented by an unused bit indicator in the DCI; or the carrier indication information is represented by bit information that does not have an indication meaning in the DCI.

In the claimed embodiment, the sending unit 601 is configured to: when the transmission device 600 preempts a channel resource in an LBT manner, and the transmission device 600 does not obtain the channel resource by means of preemption, send the carrier indication information to the second device. The carrier indication information is used to instruct the second device to transmit the channel state information of the unlicensed carrier on the licensed carrier, the transmission device 600 is a base station, and the second device is user equipment.

The transmission device 600 executes the method in FIG. 1 and implements functions of the base station in the embodiments shown in FIG. 1 and FIG. 2. Details are not described herein again in this embodiment of the present invention.

FIG. 7 is a schematic structural diagram of a transmission device 700 according to an embodiment of the present invention. The transmission device 700 includes a receiving unit 701 and a sending unit 702.

The receiving unit 701 is configured to receive carrier indication information sent by a first device.

The carrier indication information is used to indicate a carrier resource used when the transmission device 700 sends channel state information of an unlicensed carrier.

The sending unit 702 is configured to: when the carrier resource indicated by the carrier indication information is a licensed carrier, send the channel state information of the unlicensed carrier on the licensed carrier.

In this embodiment of the present invention, the transmission device 700 reports the channel state information of the unlicensed carrier to the first device in time according to the carrier resource that is used for transmitting the channel state information and that is indicated by the first device, so that the first device can make a corresponding scheduling decision in time according to the channel state information of the unlicensed carrier.

The carrier indication information is represented by an information bit; in the unclaimed embodiment, the carrier indication information is represented by a scrambling manner used for transmitting designated signaling; or the carrier indication information is represented by a sequence number of a subcarrier used for transmitting designated signaling.

In the claimed embodiment, embodiment, the receiving unit 701 is configured to receive downlink control information DCI to obtain the carrier indication information. The DCI carries a channel state information CSI request and the carrier indication information, the CSI request is used to request the transmission device 700 to send the channel state information of the unlicensed carrier, the first device is a base station, and the transmission device 700 is user equipment. The sending unit 702 is configured to send the channel state information of the unlicensed carrier on the licensed carrier according to the CSI request.

Further, the carrier indication information is represented by a newly-added bit indicator in the DCI; or the carrier indication information is represented by an unused bit indicator in the DCI; or the carrier indication information is represented by bit information that does not have an indication meaning in the DCI.

In the claimed embodiment, the sending unit 702 is configured to send the channel state information of the unlicensed carrier on the licensed carrier in a first channel state information period after a moment at which the carrier indication information is received.

The transmission device 700 executes the method in FIG. 3 and implements functions of the UE in the embodiments shown in FIG. 2 and FIG. 3. Details are not described herein again in this embodiment of the present invention.

FIG. 8 is a schematic structural diagram of a transmission device 800 according to an unclaimed embodiment.

The transmission device 800 includes a receiving unit 801 and a determining unit 802.

The receiving unit 801 is configured to receive, on a licensed carrier, channel state information sent by a second device.

The second device does not obtain a carrier resource of an unlicensed carrier at present, the channel state information carries an identifier of the unlicensed carrier, the transmission device 800 is a base station, and the second device is user equipment.

The determining unit 802 is configured to determine, according to the identifier, that the channel state information is channel state information of the unlicensed carrier.

In this example, the transmission device 800 determines, by using the carrier identifier in the channel state information sent by the second device on the licensed carrier, the unlicensed carrier to which the channel state information belongs, so that the transmission device 800 can make a corresponding scheduling decision in time according to the channel state information of the unlicensed carrier.

The transmission device 800 may further execute the method in FIG. 4 and may implement functions of the first device or the base station in the example shown in FIG. 4. Details are not described herein again in this example.

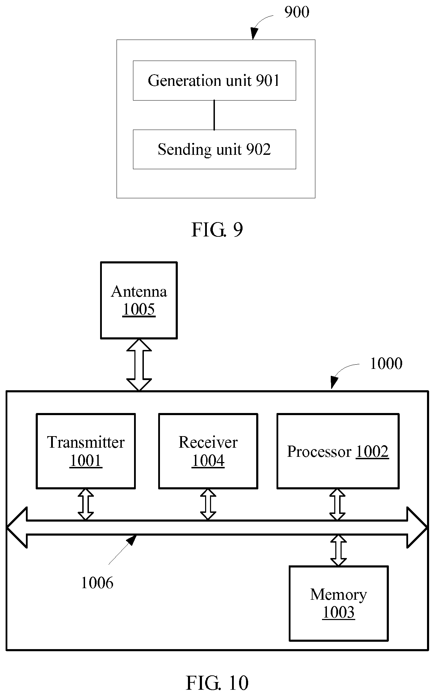

FIG 9 is a schematic structural diagram of a transmission device 900 according to an unclaimed embodiment.

The transmission device 900 includes a generation unit 901 and a sending unit 902.

The generation unit 901 is configured to generate channel state information of an unlicensed carrier.

The channel state information carries an identifier of the unlicensed carrier, the transmission device 900 does not obtain a carrier resource of the unlicensed carrier at present, the first device is a base station, and the transmission device 900 is user equipment.

The sending unit 902 is configured to send the channel state information on a licensed carrier.

In this example, the transmission device 900 adds the identifier of the unlicensed carrier to the channel state information of the unlicensed carrier, and then sends the channel state information to the first device on the licensed carrier, so that the first device can determine, according to the identifier, the unlicensed carrier to which the channel state information belongs, and the first device can make a corresponding scheduling decision in time according to the channel state information of the unlicensed carrier.

The transmission device 900 may further execute the method in FIG. 5 and may implement functions of the second device or the UE in the example shown in FIG. 5. Details are not described herein again in this example.

FIG. 10 is a schematic structural diagram of a transmission device 1000 according to an embodiment of the present invention. The transmission device 1000 may include a processor 1002, a memory 1003, a transmitter 1001, and a receiver 1004. In specific application, the transmission device 1000 may be a base station, a relay, a radio access point (Access Point, AP), or the like.

The receiver 1004, the transmitter 1001, the processor 1002, and the memory 1003 are connected to each other by using a bus system 1006. The bus 1006 may be an ISA bus, a PCI bus, an EISA bus, or the like. The bus may include an address bus, a data bus, a control bus, or the like. For ease of indication, in FIG. 10, the bus is indicated by using only one double-headed arrow; however, it does not mean that there is only one bus or only one type of bus. In specific application, the transmitter 1001 and the receiver 1004 may be coupled to an antenna 1005.

The memory 1003 is configured to store a program. Specifically, the program may include program code, and the program code includes a computer operation instruction. The memory 1003 may include a read-only memory and a random access memory, and provide an instruction and data for the processor 1002. The memory 1003 may include a high-speed RAM memory, and may also include a non-volatile memory (non-volatile memory), for example at least one magnetic disk memory.

The processor 1002 executes the program stored by the memory 1003 and is specifically configured to perform the following operations:
sending carrier indication information to a second device by using the transmitter 1001, where the carrier indication information is used to indicate a carrier resource used when the second device sends channel state information of an unlicensed carrier; and
when the carrier resource indicated by the carrier indication information is a licensed carrier, receiving, on the licensed carrier by using the receiver 1004, the channel state information sent by the second device.

The foregoing method that is executed by the first device or the base station and that is disclosed in either of the embodiments in FIG. 1 and FIG. 2 of the present invention may be applied to the processor 1002, or may be implemented by the processor 1002. The processor 1002 may be an integrated circuit chip and has a signal processing capability. In an implementation process, steps in the foregoing methods may be completed by means of an integrated logic circuit of hardware in the processor 1002 or an instruction in a form of software. The foregoing processor 1002 may be a general-purpose processor, including a central processing unit (Central Processing Unit, CPU for short), a network processor (Network Processor, NP for short), and the like; or may be a digital signal processor (DSP), an application-specific integrated circuit (ASIC), a field programmable gate array (FPGA), or another programmable logic device, a discrete gate or a transistor logic device, or a discrete hardware component. The processor 1002 may implement or perform methods, steps, and logical block diagrams disclosed in the embodiments of the present invention. The general purpose processor may be a microprocessor, or the processor may be any normal processor, or the like. The steps of the method disclosed with reference to the embodiments of the present invention may be directly performed and completed by a hardware decoding processor, or performed and completed by a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory 1003. The processor 1002 reads information from the memory 1003, and completes the steps of the foregoing methods in combination with the hardware.

In this embodiment of the present invention, the transmission device 1000 indicates, to the second device, the carrier resource used for transmitting the channel state information, so that the second device can send the channel state information of the unlicensed carrier to the transmission device in time, and the transmission device 1000 can make a corresponding scheduling decision in time according to the channel state information of the unlicensed carrier.

The carrier indication information is represented by an information bit; in the unclaimed embodiment, the carrier indication information is represented by a scrambling manner used for transmitting designated signaling; or the carrier indication information is represented by a sequence number of a subcarrier used for transmitting designated signaling.

In the claimed embodiment, the processor 1002 is configured to send the carrier indication information to the second device by using the transmitter 1001 and DCI. The DCI carries a CSI request and the carrier indication information, the CSI request is used to request the second device to send the channel state information of the unlicensed carrier, the transmission device 1000 is a base station, and the second device is user equipment.

In the claimed embodiment, the carrier indication information is represented by a newly-added bit indicator in the DCI; or the carrier indication information is represented by an unused bit indicator in the DCI; or the carrier indication information is represented by bit information that does not have an indication meaning in the DCI.

In the claimed embodiment, the processor 1002 is specifically configured to: when the transmission device 1000 preempts a channel resource in an LBT manner, and the transmission device 1000 does not obtain the channel resource by means of preemption, send the carrier indication information to the second device by using the transmitter 1001. The carrier indication information is used to instruct the second device to transmit the channel state information of the unlicensed carrier on the licensed carrier, the transmission device 1000 is a base station, and the second device is user equipment.

The transmission device 1000 executes the method in FIG. 1 and implements functions of the base station in the embodiments shown in FIG. 1 and FIG. 2. Details are not described herein again in this embodiment of the present invention.

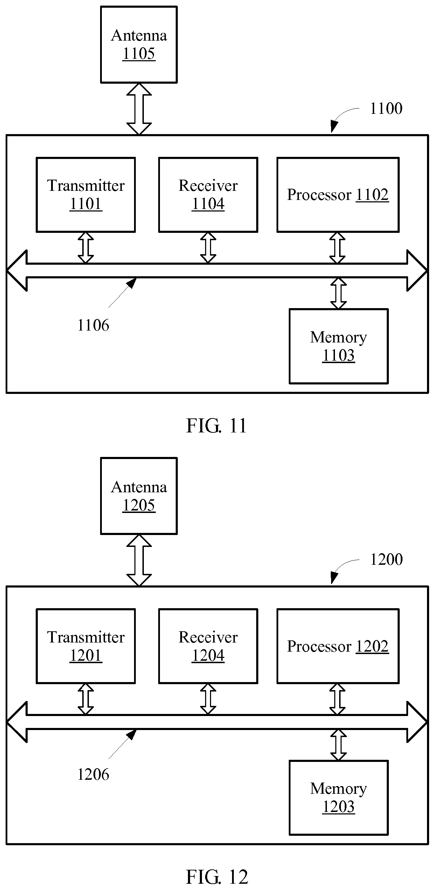

FIG. 11 is a schematic structural diagram of a transmission device 1100 according to an embodiment of the present invention. The transmission device 1100 may include a processor 1102, a memory 1103, a transmitter 1101, and a receiver 1104. In specific application, the transmission device 1100 may be a mobile terminal such as a smartphone.

The receiver 1104, the transmitter 1101, the processor 1102, and the memory 1103 are connected to each other by using a bus system 1106. The bus 1106 may be an ISA bus, a PCI bus, an EISA bus, or the like. The bus may include an address bus, a data bus, a control bus, or the like. For ease of indication, in FIG. 11, the bus is indicated by using only one double-headed arrow; however, it does not mean that there is only one bus or only one type of bus. In specific application, the transmitter 1101 and the receiver 1104 may be coupled to an antenna 1105.

The memory 1103 is configured to store a program. Specifically, the program may include program code, and the program code includes a computer operation instruction. The memory 1103 may include a read-only memory and a random access memory, and provide an instruction and data for the processor 1102. The memory 1103 may include a high-speed RAM memory, and may also include a non-volatile memory (non-volatile memory), for example at least one magnetic disk memory.

The processor 1102 executes the program stored by the memory 1103 and is specifically configured to perform the following operations:
receiving carrier indication information sent by a first device, where the carrier indication information is used to indicate a carrier resource used when the transmission device 1100 sends channel state information of an unlicensed carrier; and
when the carrier resource indicated by the carrier indication information is a licensed carrier, sending the channel state information of the unlicensed carrier on the licensed carrier.

The foregoing method that is executed by the UE and that is disclosed in either of the embodiments in FIG. 2 and FIG. 3 of the present invention may be applied to the processor 1102, or may be implemented by the processor 1102. The processor 1102 may be an integrated circuit chip and has a signal processing capability. In an implementation process, steps in the foregoing methods may be completed by means of an integrated logic circuit of hardware in the processor 1102 or an instruction in a form of software. The foregoing processor 1102 may be a general-purpose processor, including a central processing unit (Central Processing Unit, CPU for short), a network processor (Network Processor, NP for short), and the like; or may be a digital signal processor (DSP), an application-specific integrated circuit (ASIC), a field programmable gate array (FPGA), or another programmable logic device, a discrete gate or a transistor logic device, or a discrete hardware component. The processor 1102 may implement or perform methods, steps, and logical block diagrams disclosed in the embodiments of the present invention. The general purpose processor may be a microprocessor, or the processor may be any normal processor, or the like. The steps of the method disclosed with reference to the embodiments of the present invention may be directly performed and completed by a hardware decoding processor, or performed and completed by a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory 1103. The processor 1102 reads information from the memory 1103, and completes the steps of the foregoing methods in combination with the hardware.

In this embodiment of the present invention, the transmission device 1100 reports the channel state information of the unlicensed carrier to the first device in time according to the carrier resource that is used for transmitting the channel state information and that is indicated by the first device, so that the first device can make a corresponding scheduling decision in time according to the channel state information of the unlicensed carrier.

The carrier indication information is represented by an information bit; in the unclaimed embodiment, the carrier indication information is represented by a scrambling manner used for transmitting designated signaling; or the carrier indication information is represented by a sequence number of a subcarrier used for transmitting designated signaling.

In the claimed embodiment, the processor 1102 is configured to receive downlink control information DCI by using the receiver 1104 to obtain the carrier indication information. The DCI carries a channel state information CSI request and the carrier indication information, the CSI request is used to request the transmission device 1100 to send the channel state information of the unlicensed carrier, the first device is a base station, and the transmission device 1100 is user equipment. Further, the processor 1102 is specifically configured to send the channel state information of the unlicensed carrier on the licensed carrier according to the CSI request by using the transmitter 1101.

In the claimed embodiment, the carrier indication information is represented by a newly-added bit indicator in the DCI; or the carrier indication information is represented by an unused bit indicator in the DCI; or the carrier indication information is represented by bit information that does not have an indication meaning in the DCI.

In the claimed embodiment, the processor 1102 is configured to send the channel state information of the unlicensed carrier on the licensed carrier by using the transmitter 1101 in a first channel state information period after a moment at which the carrier indication information is received by using the receiver 1104.

The transmission device 1100 executes the method in FIG. 3 and implements functions of the UE in the embodiments shown in FIG. 2 and FIG. 3. Details are not described herein again in this embodiment of the present invention.

FIG. 12 is a schematic structural diagram of a transmission device 1200 according to an unclaimed embodiment.

The transmission device 1200 may include a processor 1202, a memory 1203, a transmitter 1201, and a receiver 1204. In specific application, the transmission device 1200 may be a base station, a relay, a radio access point (Access Point, AP), or the like.

The receiver 1204, the transmitter 1201, the processor 1202, and the memory 1203 are connected to each other by using a bus system 1206. The bus 1206 may be an ISA bus, a PCI bus, an EISA bus, or the like. The bus may include an address bus, a data bus, a control bus, or the like. For ease of indication, in FIG. 12, the bus is indicated by using only one double-headed arrow; however, it does not mean that there is only one bus or only one type of bus. In specific application, the transmitter 1201 and the receiver 1204 may be coupled to an antenna 1205.

The memory 1203 is configured to store a program. Specifically, the program may include program code, and the program code includes a computer operation instruction. The memory 1203 may include a read-only memory and a random access memory, and provide an instruction and data for the processor 1202. The memory 1203 may include a high-speed RAM memory, and may also include a non-volatile memory (non-volatile memory), for example at least one magnetic disk memory.

The processor 1202 executes the program stored by the memory 1203 and is specifically configured to perform the following operations:
receiving, on a licensed carrier, channel state information sent by a second device, where the second device does not obtain a carrier resource of an unlicensed carrier at present, the channel state information carries an identifier of the unlicensed carrier, the transmission device 1200 is a base station, and the second device is user equipment; and
determining, according to the identifier, that the channel state information is channel state information of the unlicensed carrier.

The foregoing method that is executed by the first device or the base station and that is disclosed in FIG. 4 of the present invention may be applied to the processor 1202, or may be implemented by the processor 1202. The processor 1202 may be an integrated circuit chip and has a signal processing capability. In an implementation process, steps in the foregoing methods may be completed by means of an integrated logic circuit of hardware in the processor 1202 or an instruction in a form of software. The foregoing processor 1202 may be a general-purpose processor, including a central processing unit (Central Processing Unit, CPU for short), a network processor (Network Processor, NP for short), and the like; or may be a digital signal processor (DSP), an application-specific integrated circuit (ASIC), a field programmable gate array (FPGA), or another programmable logic device, a discrete gate or a transistor logic device, or a discrete hardware component. The processor 1202 may implement or perform methods, steps, and logical block diagrams disclosed in the examples. The general purpose processor may be a microprocessor, or the processor may be any normal processor, or the like. The steps of the method disclosed with reference to the examples of this disclosure may be directly performed and completed by a hardware decoding processor, or performed and completed by a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory 1203. The processor 1202 reads information from the memory 1203, and completes the steps of the foregoing methods in combination with the hardware.

In this example of the present invention, the transmission device 1200 determines, by using the carrier identifier in the channel state information sent by the second device on the licensed carrier, the unlicensed carrier to which the channel state information belongs, so that the transmission device 1200 can make a corresponding scheduling decision in time according to the channel state information of the unlicensed carrier.

The transmission device 1200 may further execute the method in FIG. 4 and may implement functions of the first device or the base station in the example shown in FIG. 4. Details are not described herein again in this example.

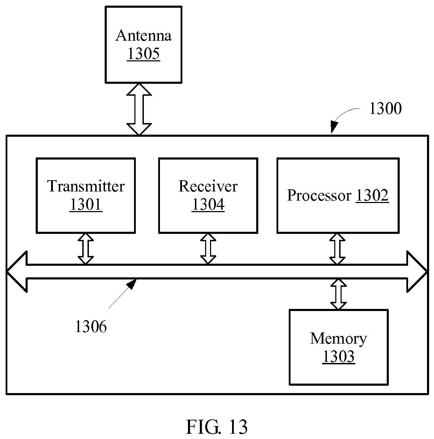

FIG. 13 is a schematic structural diagram of a transmission device 1300 according to an unclaimed embodiment.

The transmission device 1300 may include a processor 1302, a memory 1303, a transmitter 1301, and a receiver 1304. In specific application, the transmission device 1300 may be a mobile terminal such as a smartphone.

The receiver 1304, the transmitter 1301, the processor 1302, and the memory 1303 are connected to each other by using a bus system 1306. The bus 1306 may be an ISA bus, a PCI bus, an EISA bus, or the like. The bus may include an address bus, a data bus, a control bus, or the like. For ease of indication, in FIG. 13, the bus is indicated by using only one double-headed arrow; however, it does not mean that there is only one bus or only one type of bus. In specific application, the transmitter 1301 and the receiver 1304 may be coupled to an antenna 1305.

The memory 1303 is configured to store a program. Specifically, the program may include program code, and the program code includes a computer operation instruction. The memory 1303 may include a read-only memory and a random access memory, and provide an instruction and data for the processor 1302. The memory 1303 may include a high-speed RAM memory, and may also include a non-volatile memory (non-volatile memory), for example at least one magnetic disk memory.

The processor 1302 executes the program stored by the memory 1303 and is specifically configured to perform the following operations:
generating channel state information of an unlicensed carrier, where the channel state information carries an identifier of the unlicensed carrier, the transmission device 1300 does not obtain a carrier resource of the unlicensed carrier at present, the first device is a base station, and the transmission device 1300 is user equipment; and
sending the channel state information on a licensed carrier.

The foregoing method that is executed by the second device or the UE and that is disclosed in the example in FIG. 5 of the present invention may be applied to the processor 1302, or may be implemented by the processor 1302. The processor 1302 may be an integrated circuit chip and has a signal processing capability. In an implementation process, steps in the foregoing methods may be completed by means of an integrated logic circuit of hardware in the processor 1302 or an instruction in a form of software. The foregoing processor 1302 may be a general-purpose processor, including a central processing unit (Central Processing Unit, CPU for short), a network processor (Network Processor, NP for short), and the like; or may be a digital signal processor (DSP), an application-specific integrated circuit (ASIC), a field programmable gate array (FPGA), or another programmable logic device, a discrete gate or a transistor logic device, or a discrete hardware component. The processor 1302 may implement or perform methods, steps, and logical block diagrams disclosed in the examples of this disclosure. The general purpose processor may be a microprocessor, or the processor may be any normal processor, or the like. The steps of the method disclosed with reference to the examples of this disclosure may be directly performed and completed by a hardware decoding processor, or performed and completed by a combination of hardware and software modules in a decoding processor. The software module may be located in a mature storage medium in the field, such as a random access memory, a flash memory, a read-only memory, a programmable read-only memory, an electrically-erasable programmable memory, or a register. The storage medium is located in the memory 1303. The processor 1302 reads information from the memory 1303, and completes the steps of the foregoing methods in combination with the hardware.

In this example of the present invention, the transmission device 1300 adds the identifier of the unlicensed carrier to the channel state information of the unlicensed carrier, and then sends the channel state information to the first device on the licensed carrier, so that the first device can determine, according to the identifier, the unlicensed carrier to which the channel state information belongs, and the first device can make a corresponding scheduling decision in time according to the channel state information of the unlicensed carrier.

The transmission device 1300 may further execute the method in FIG. 5 and may implement functions of the second device or the UE in the examples shown in FIG. 5. Details are not described herein again in this examples.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

It should be further understood that first, second, and various numerical sequence numbers are for distinguishing only for ease of description, and do not used to limit a scope of the embodiments of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The tection scope of the present invention shall be subject to the protection scope of the claims.

## Claims

1. A method for transmitting channel state information for a Licensed-Assisted Access system, comprising:
sending (101), by a base station, carrier indication information to a user equipment, UE, wherein the carrier indication information is used to indicate a carrier resource used when the UE sends channel state information of an unlicensed carrier;
receiving (102), by the base station, channel state information sent by the UE, on the carrier resource indicated by the carrier indication information;
wherein the method further comprises
preempting, by the base station, the carrier resource on an unlicensed carrier in a Listen-Before-Talk manner, wherein the base station instructs, by using the carrier indication information, the UE to send the channel state information by using the preempted unlicensed carrier; or
when the carrier resource indicated by the carrier indication information is not obtained by means of preemption, the base station instructs, by using the carrier indication information, the UE to send the channel state information by using a licensed carrier;
wherein the sending (101), by the base station, the carrier indication information to the UE comprises:
sending, by the base station, the carrier indication information to the UE using downlink control information, DCI, wherein the DCI carries a channel state information, CSI, request and the carrier indication information, the CSI request is used to request the UE to send the channel state information of the unlicensed carrier, and wherein
the carrier indication information is represented by a newly-added bit indicator in the DCI; or
the carrier indication information is represented by an unused bit indicator in the DCI; or
the carrier indication information is represented by bit information that does not have an indication meaning in the DCI.

2. A method for transmitting channel state information for a Licensed-Assisted Access system, comprising:
receiving (301), by a user equipment, UE, carrier indication information sent by a base station, wherein the carrier indication information is used to indicate a carrier resource used when the UE sends channel state information of an unlicensed carrier; and
sending (302), by the UE, the channel state information of the unlicensed carrier on the carrier resource indicated by the carrier indication information;
wherein the receiving (301) the carrier indication information comprises receiving, by the UE, downlink control information, DCI, to obtain the carrier indication information, wherein the DCI carries a channel state information, CSI, request and the carrier indication information, the CSI request is used to request the UE to send the channel state information of the unlicensed carrier;
wherein when the carrier resource indicated by the carrier indication information is an unlicensed carrier, the UE sends the channel state information of the unlicensed carrier on the unlicensed carrier according to the CSI request;
wherein when the carrier resource indicated by the carrier indication information is a licensed carrier, the UE sends the channel state information of the unlicensed carrier on the licensed carrier according to the CSI request, and
wherein the channel state information of the unlicensed carrier is sent on the licensed carrier in a first channel state information period after a moment at which the carrier indication information is received, and wherein
the carrier indication information is represented by a newly-added bit indicator in the DCI; or
the carrier indication information is represented by an unused bit indicator in the DCI; or
the carrier indication information is represented by bit information that does not have an indication meaning in the DCI.

3. A base station (600) for a Licensed-Assisted Access system, wherein
the base station (600) is configured to preempt an unlicensed carrier resource in a Listen-Before-Talk manner, and the base station (600) comprises:
a sending unit (601), configured to send carrier indication information to a user equipment, UE, wherein the carrier indication information is used to indicate a carrier resource used when the UE sends channel state information of an unlicensed carrier; and
a receiving unit (602), configured to receive channel state information sent by the UE, on the carrier resource indicated by the carrier indication information;
wherein the sending unit (601) is configured to:
send the carrier indication information to the UE using downlink control information, DCI, wherein the DCI carries a channel state information, CSI, request and the carrier indication information, the CSI request is used to request the UE to send the channel state information of the unlicensed carrier, and wherein
the carrier indication information is represented by a newly-added bit indicator in the DCI; or
the carrier indication information is represented by an unused bit indicator in the DCI; or
the carrier indication information is represented by bit information that does not have an indication meaning in the DCI,
wherein when the carrier indication information sent by the base station is used to indicate the preempted carrier resource, the base station is configured to instruct, by using the carrier indication information, the UE to send the channel state information by using the preempted unlicensed carrier; and
when the carrier resource indicated by the carrier indication information is not obtained by means of preemption, the base station configured to instruct, by using the carrier indication information, the UE to send the channel state information by using a licensed carrier.

4. A user equipment, UE, (700) for a Licensed-Assisted Access system, comprising:
a receiving unit (701), configured to receive carrier indication information sent by a base station, wherein the carrier indication information is used to indicate a carrier resource used when the UE sends channel state information of an unlicensed carrier; and
a sending unit (702), configured to send the channel state information of the unlicensed carrier on the carrier resource indicated by the carrier indication information;
wherein the channel state information of the unlicensed carrier on the licensed carrier is sent in a first channel state information period after a moment at which the carrier indication information is received; and
wherein the receiving unit (701) is configured to
receive downlink control information, DCI, to obtain the carrier indication information, wherein the DCI carries a channel state information, CSI, request and the carrier indication information, the CSI request is used to request the UE to send the channel state information of the unlicensed carrier;
wherein the sending unit (702) is configured to send the channel state information of the unlicensed carrier on the unlicensed carrier according to the CSI request when the carrier resource indicated by the carrier indication information is an unlicensed carrier;
wherein the sending unit (702) is configured to send the channel state information of the unlicensed carrier on the licensed carrier according to the CSI request when the carrier resource indicated by the carrier indication information is a licensed carrier, and wherein
the carrier indication information is represented by a newly-added bit indicator in the DCI; or
the carrier indication information is represented by an unused bit indicator in the DCI; or
the carrier indication information is represented by bit information that does not have an indication meaning in the DCI.

## Patentansprüche

1. Verfahren zur Übertragung von Kanalstatusinformationen für ein lizenzgestütztes Zugangssystem, umfassend:
Senden (101), durch eine Basisstation, von Trägerangabeinformationen an eine Benutzereinrichtung, UE, wobei die Trägerangabeinformationen verwendet werden, um eine Trägerressource anzugeben, die verwendet wird, wenn die UE Kanalstatusinformationen eines unlizenzierten Trägers sendet;
Empfangen (102), durch die Basisstation, von Kanalstatusinformationen, die durch die UE gesendet werden, auf der Trägerressource, die durch die Trägerangabeinformationen angegeben wird;
wobei das Verfahren ferner Folgendes umfasst:
Vorbelegen, durch die Basisstation, der Trägerressource auf einem unlizenzierten Träger in einer Listen-Before-Talk-Weise, wobei die Basisstation die UE unter Verwendung der Trägerangabeinformationen anweist, die Kanalstatusinformationen unter Verwendung des vorbelegten, unlizenzierten Trägers zu senden; oder
wenn die Trägerressource, die durch die Trägerangabeinformationen angegeben wird, nicht durch Vorbelegung erhalten wird, die Basisstation die UE unter Verwendung der Trägerangabeinformationen anweist, die Kanalstatusinformationen unter Verwendung eines lizenzierten Trägers zu senden;
wobei das Senden (101), durch die Basisstation, der Trägerangabeinformationen an die UE Folgendes umfasst:
Senden, durch die Basisstation, der Trägerangabeinformationen an die UE unter Verwendung von Downlink-Steuerinformationen, DCI, wobei die DCI eine Kanalstatusinformationsaufforderung, CSI-Aufforderung, und die Trägerangabeinformationen tragen, die CSI-Aufforderung verwendet wird, um die UE aufzufordern, die Kanalstatusinformationen des unlizenzierten Trägers zu senden, und wobei
die Trägerangabeinformationen durch einen neu hinzugefügten Bitindikator in den DCI dargestellt werden; oder
die Trägerangabeinformationen durch einen unbenutzten Bitindikator in den DCI dargestellt werden; oder
die Trägerangabeinformationen durch Bitinformationen dargestellt werden, die in den DCI keine Angabebedeutung aufweisen.

2. Verfahren zur Übertragung von Kanalstatusinformationen für ein lizenzgestütztes Zugangssystem, umfassend:
Empfangen (301), durch eine Benutzereinrichtung, UE, von Trägerangabeinformationen, die durch eine Basisstation gesendet werden, wobei die Trägerangabeinformationen verwendet werden, um eine Trägerressource anzugeben, die verwendet wird, wenn die UE Kanalstatusinformationen eines unlizenzierten Trägers sendet; und
Senden (302), durch die UE, der Kanalstatusinformationen des unlizenzierten Trägers auf der Trägerressource, die durch die Trägerangabeinformationen angegeben wird;
wobei das Empfangen (301) der Trägerangabeinformationen Empfangen, durch die UE, von Downlink-Steuerinformationen, DCI, um die Trägerangabeinformationen zu erhalten, wobei die DCI eine Kanalstatusinformationsaufforderung, CSI-Aufforderung und die Trägerangabeinformationen tragen, und die CSI-Aufforderung verwendet wird, um die UE aufzufordern, die Kanalstatusinformationen des unlizenzierten Trägers zu senden, umfasst;
wobei, wenn die Trägerressource, die durch die Trägerangabeinformationen angegeben wird, ein unlizenzierter Träger ist, die UE die Kanalstatusinformationen des unlizenzierten Trägers auf dem unlizenzierten Träger gemäß der CSI-Aufforderung sendet;
wobei, wenn die Trägerressource, die durch die Trägerangabeinformationen angegeben wird, ein lizenzierter Träger ist, die UE die Kanalstatusinformationen des unlizenzierten Trägers auf dem lizenzierten Träger gemäß der CSI-Aufforderung sendet, und
wobei die Kanalstatusinformationen des unlizenzierten Trägers auf dem lizenzierten Träger in einer ersten Kanalstatusinformationsperiode nach einem Zeitpunkt, zu dem die Trägerangabeinformationen empfangen werden, gesendet werden, und wobei
die Trägerangabeinformationen durch einen neu hinzugefügten Bitindikator in den DCI dargestellt werden; oder
die Trägerangabeinformationen durch einen unbenutzten Bitindikator in den DCI dargestellt werden; oder
die Trägerangabeinformationen durch Bitinformationen dargestellt werden, die in den DCI keine Angabebedeutung aufweisen.

3. Basisstation (600) für ein lizenzgestütztes Zugangssystem, wobei
die Basisstation (600) dazu konfiguriert ist, eine unlizenzierte Trägerressource in einer Listen-Before-Talk-Weise vorzubelegen, und die Basisstation (600) Folgendes umfasst:
eine Sendeeinheit (601), die dazu konfiguriert ist, Trägerangabeinformationen an eine Benutzereinrichtung, UE, zu senden, wobei die Trägerangabeinformationen verwendet werden, um eine Trägerressource anzugeben, die verwendet wird, wenn die UE Kanalstatusinformationen eines unlizenzierten Trägers sendet; und
eine Empfangseinheit (602), die dazu konfiguriert ist, Kanalstatusinformationen, die durch die UE gesendet werden, auf der Trägerressource, die durch die Trägerangabeinformationen angegeben werden, zu empfangen;
wobei die Sendeeinheit (601) zu Folgendem konfiguriert ist:
Senden der Trägerangabeinformationen an die UE unter Verwendung von Downlink-Steuerinformationen, DCI, wobei die DCI eine Kanalstatusinformationsaufforderung, CSI-Aufforderung, und die Trägerangabeinformationen tragen, die CSI-Aufforderung verwendet wird, um die UE aufzufordern, die Kanalstatusinformationen des unlizenzierten Trägers zu senden, und wobei
die Trägerangabeinformationen durch einen neu hinzugefügten Bitindikator in den DCI dargestellt werden; oder
die Trägerangabeinformationen durch einen unbenutzten Bitindikator in den DCI dargestellt werden; oder
die Trägerangabeinformationen durch Bitinformationen dargestellt werden, die in den DCI keine Angabebedeutung aufweisen,
wobei, wenn die Trägerangabeinformationen, die durch die Basisstation gesendet werden, verwendet werden, um die vorbelegte Trägerressource anzugeben, die Basisstation dazu konfiguriert ist, die UE unter Verwendung der Trägerangabeinformationen anzuweisen, die Kanalstatusinformationen unter Verwendung des vorbelegten unlizenzierten Trägers zu senden; und
wenn die Trägerressource, die durch die Trägerangabeinformationen angegeben wird, nicht durch Vorbelegung erhalten wird, die Basisstation dazu konfiguriert ist, die UE unter Verwendung der Trägerangabeinformationen anzuweisen, die Kanalstatusinformationen unter Verwendung eines lizenzierten Trägers zu senden.

4. Benutzereinrichtung, UE, (700) für ein lizenzgestütztes Zugangssystem, umfassend:
eine Empfangseinheit (701), die dazu konfiguriert ist, Trägerangabeinformationen, die durch eine Basisstation gesendet werden, zu empfangen, wobei die Trägerangabeinformationen verwendet werden, um eine Trägerressource anzugeben, die verwendet wird, wenn die UE Kanalstatusinformationen eines unlizenzierten Trägers sendet; und
eine Sendeeinheit (702), die dazu konfiguriert ist, die Kanalstatusinformationen des unlizenzierten Trägers auf der Trägerressource, die durch die Trägerangabeinformationen angegeben werden, zu senden;
wobei die Kanalstatusinformationen des unlizenzierten Trägers auf dem lizenzierten Träger in einer ersten Kanalstatusinformationsperiode nach einem Zeitpunkt, zu dem die Trägerangabeinformationen empfangen werden, gesendet werden; und
wobei die Empfangseinheit (701) zu Folgendem konfiguriert ist:
Empfangen von Downlink-Steuerinformationen (DCI), um die Trägerangabeinformationen zu erhalten, wobei die DCI eine Kanalstatusinformationsaufforderung, CSI-Aufforderung, und die Trägerangabeinformationen tragen, und die CSI-Aufforderung verwendet wird, um die UE aufzufordern, die Kanalstatusinformationen des unlizenzierten Trägers zu senden;
wobei die Sendeeinheit (702) dazu konfiguriert ist, die Kanalstatusinformationen des unlizenzierten Trägers auf dem unlizenzierten Träger gemäß der CSI-Aufforderung zu senden, wenn die Trägerressource, die durch die Trägerangabeinformationen angegeben wird, ein unlizenzierter Träger ist;
wobei die Sendeeinheit (702) dazu konfiguriert ist, die Kanalstatusinformationen des unlizenzierten Trägers auf dem lizenzierten Träger gemäß der CSI-Aufforderung zu senden, wenn die Trägerressource, die durch die Trägerangabeinformationen angegeben wird, ein lizenzierter Träger ist, und wobei
die Trägerangabeinformationen durch einen neu hinzugefügten Bitindikator in den DCI dargestellt werden; oder
die Trägerangabeinformationen durch einen unbenutzten Bitindikator in den DCI dargestellt werden; oder
die Trägerangabeinformationen durch Bitinformationen dargestellt werden, die in den DCI keine Angabebedeutung aufweisen.

## Revendications

1. Procédé pour transmettre des informations d'état de canal pour un système d'accès assisté sous licence, comprenant :
l'envoi (101), par une station de base, d'informations d'indication de support à un équipement utilisateur, UE, dans lequel les informations d'indication de support sont utilisées pour indiquer une ressource de support utilisée lorsque l'UE envoie des informations d'état de canal d'un support sans licence ;
la réception (102), par la station de base, d'informations d'état de canal envoyées par l'UE, sur la ressource de source indiquée par les informations d'indication de support ;
dans lequel le procédé comprend également
la préemption, par la station de base, de la ressource de support sur un support sans licence selon une méthode d'écoute avant de parler, dans lequel la station de base ordonne, à l'aide des informations d'indication de support, à l'UE d'envoyer les informations d'état de canal à l'aide du support sans licence préempté ; ou
lorsque la ressource de support indiquée par les informations d'indication de support n'est pas obtenue au moyen d'une préemption, la station de base ordonne, à l'aide des informations d'indication de support, à l'UE d'envoyer les informations d'état de canal à l'aide d'un support sous licence ;
dans lequel l'envoi (101), par la station de base, des informations d'indication de support à l'UE comprend :
l'envoi, par la station de base, des informations d'indication de support à l'UE à l'aide d'informations de commande de liaison descendante, DCI, dans lequel les DCI transportent une demande d'informations d'état de canal, CSI, et les informations d'indication de support, la demande de CSI est utilisée pour demander à l'UE d'envoyer les informations d'état de canal de support sans licence, et dans lequel
les informations d'indication de support sont représentées par un indicateur de bit nouvellement ajouté dans les DCI ; ou
les informations d'indication de support sont représentées par un indicateur de bit inutilisé dans les DCI ; ou
les informations d'indication de support sont représentées par des informations binaires qui n'ont pas de signification d'indication dans les DCI.

2. Procédé pour transmettre des informations d'état de canal pour un système d'accès assisté sous licence, comprenant :
la réception (301), par un équipement utilisateur, UE, d'informations d'indication de support envoyées par une station de base, dans lequel les informations d'indication de support sont utilisées pour indiquer une ressource de support utilisée lorsque l'UE envoie des informations d'état de canal d'un support sans licence ; et
l'envoi (302), par l'UE, des informations d'état de canal de support sans licence sur la ressource de support indiquée par les informations d'indication de support ;
dans lequel la réception (301) des informations d'indication de support comprennent la réception, par la station de base, des informations d'indication de support à l'UE à l'aide d'informations de commande de liaison descendante, DCI, dans lequel les DCI transportent une demande d'informations d'état de canal, CSI, et les informations d'indication de support, la demande de CSI est utilisée pour demander à l'UE d'envoyer les informations d'état de canal de support sans licence ;
dans lequel, lorsque la ressource de support indiquée par les informations d'indication de support est un support sans licence, l'UE envoie les informations d'état de canal de support sans licence sur le support sans licence selon la demande CSI ;
dans lequel, lorsque la ressource de support indiquée par les informations d'indication de support est un support sous licence, l'UE envoie les informations d'état de canal de support sous licence sur le support sans licence selon la demande CSI, et
dans lequel les informations d'état de canal de support sans licence sont envoyées sur le support sous licence dans une première période d'informations d'état de canal après un instant auquel les informations d'indication de support sont reçues, et dans lequel
les informations d'indication de support sont représentées par un indicateur de bit nouvellement ajouté dans les DCI ; ou
les informations d'indication de support sont représentées par un indicateur de bit inutilisé dans les DCI ; ou
les informations d'indication de support sont représentées par des informations binaires qui n'ont pas de signification d'indication dans les DCI.

3. Station de base (600) pour un système d'accès assisté sous licence, dans laquelle
la station de base (600) est configurée pour préempter une ressource de support sans licence selon une méthode d'écoute avant de parler, et la station de base (600) comprend :
une unité d'envoi (601), configurée pour envoyer des informations d'indication de support à un équipement utilisateur, UE, dans laquelle les informations d'indication de support sont utilisées pour indiquer une ressource de support utilisée lorsque l'UE envoie des informations d'état de canal d'un support sans licence ;
une unité de réception (602), configurée pour recevoir des informations d'état de canal envoyées par l'UE, sur la ressource de support indiquée par les informations d'indication de support ;
dans laquelle l'unité d'envoi (601) est configurée pour :
envoyer des informations d'indication de support à l'UE à l'aide d'informations de commande de liaison descendante, DCI, dans laquelle les DCI transportent une demande d'informations d'état de canal, CSI, et les informations d'indication de support, la demande de CSI est utilisée pour demander à l'UE d'envoyer les informations d'état de canal de support sans licence, et dans laquelle
les informations d'indication de support sont représentées par un indicateur de bit nouvellement ajouté dans les DCI ; ou
les informations d'indication de support sont représentées par un indicateur de bit inutilisé dans les DCI ; ou
les informations d'indication de support sont représentées par des informations binaires qui n'ont pas de signification d'indication dans les DCI,
dans laquelle, lorsque les informations d'indication de support envoyées par la station de base sont utilisées pour indiquer la ressource de support préemptée, la station de base est configurée pour ordonner, à l'aide des informations d'indication de support, à l'UE d'envoyer les informations d'état de canal à l'aide du support sans licence préempté ; et lorsque la ressource de support indiquée par les informations d'indication de support n'est pas obtenue au moyen d'une préemption, la station de base configurée pour ordonner, à l'aide des informations d'indication de support, à l'UE d'envoyer les informations d'état de canal à l'aide d'un support sous licence ;

4. Équipement utilisateur, UE, (700) pour un système d'accès assisté sous licence, comprenant :
une unité de réception (701), configurée pour recevoir des informations d'indication de support envoyées par une station de base, dans lequel les informations d'indication de support sont utilisées pour indiquer une ressource de support utilisée lorsque l'UE envoie des informations d'état de canal d'un support sans licence ; et
une unité d'envoi (702), configurée pour envoyer les informations d'état de canal de support sans licence sur la ressource de support indiquée par les informations d'indication de support ;
dans lequel les informations d'état de canal de support sans licence sur le support sous licence sont envoyées dans une première période d'informations d'état de canal après un instant auquel les informations d'indication de support sont reçues ; et
dans lequel l'unité de réception (701) est configurée pour
recevoir des informations de commande de liaison descendante, DCI, pour obtenir des informations d'indication de support, dans lequel les DCI transportent une demande d'informations d'état de canal, CSI, et les informations d'indication de support, la demande de CSI est utilisée pour demander à l'UE d'envoyer les informations d'état de canal de support sans licence ;
dans lequel l'unité d'envoi (702) est configurée pour envoyer les informations d'état de canal de support sans licence sur le support sans licence selon la demande de CSI lorsque la ressource de support indiquée par les informations d'indication de support est un support sans licence ;
dans lequel l'unité d'envoi (702) est configurée pour envoyer les informations d'état de canal de support sans licence sur le support sous licence selon la demande de CSI lorsque la ressource de support indiquée par les informations d'indication de support est un support sous licence, et dans lequel
les informations d'indication de support sont représentées par un indicateur de bit nouvellement ajouté dans les DCI ; ou
les informations d'indication de support sont représentées par un indicateur de bit inutilisé dans les DCI ; ou
les informations d'indication de support sont représentées par des informations binaires qui n'ont pas de signification d'indication dans les DCI.
